Europäisches Patentamt

European Patent Office

Office européen des brevets

(11) Veröffentlichungsnummer: **0 179 213**
**A1**

## (12) EUROPÄISCHE PATENTANMELDUNG

(21) Anmeldenummer: 85109967.1

(22) Anmeldetag: 08.08.85

(51) Int. Cl.⁴: **G 02 B 26/10**
G 06 K 15/12, B 41 B 21/16

(30) Priorität: 22.09.84 DE 3434841

(43) Veröffentlichungstag der Anmeldung:
30.04.86 Patentblatt 86/18

(84) Benannte Vertragsstaaten:
AT CH DE GB LI

(71) Anmelder: Linotype GmbH
Frankfurter Allee 55-75
D-6236 Eschborn(DE)

(72) Erfinder: Plaot, Michael
Hamburger Strasse 36-38
D-6236 Eschborn(DE)

(74) Vertreter: Schubert, Siegmar, Dipl.-Ing. et al,
Patentanwälte Dr. V. Schmied-Kowarzik Dr. P. Weinhold
Dr.-Ing. G. Dannenberg Dr. D. Gudel Dipl.-Ing. S.
Schubert Dr. P. Barz Grosse Eschenheimer Strasse 39
D-6000 Frankfurt am Main 1(DE)

(54) Optisches Laserstrahl-Ablenksystem.

(57) Ein optisches Flachbett-Ablenksystem umfaßt mindestens eine rotierende aktive Reflexfläche (6) zum Ablenken eines Strahlenbündels (1) entlang einer Ablenkzeile in einer planen Ablenkebene (15) sowie ein zwischen der aktiven Reflexfläche und der Ablenkebene angeordnetes abbildendes Linsensystem (fΘ-Linsenanordnung 18). Um den störenden Einfluß des Lagerwobbelns auf die Abbildung zu verringern, ist dem abbildenden Linsensystem (18) ein umgekehrt fernrohrartiges optisches System (2 - 8) vorgeschaltet, welches einen Ausgangswinkel (2B) der aktiven Reflexflächen vergrößert. In Verbindung damit sind nur zwei rotierende aktive Reflexflächen vorgesehen, von denen je eine an einem nach dem Pentaprismenprinzip kippunempfindlichen Prisma (z.B. 4) ausgebildet ist.

Fig.1

EP 0 179 213 A1

## Optisches Laserstrahl-Ablenksystem

Die Erfindung betrifft ein optisches Flachbett-Ablenksystem nach dem Oberbegriff des Anspruchs 1.

Derartige bekannte optische Flachbett-Ablenksysteme können für verschiedene Anwendungen als Eingabescanner oder Ausgabescanner verwendet werden.

Im vorliegenden Fall ist eine bevorzugte Anwendung des optischen Flachbett-Ablenksystems das Setzen typographischer Schriftzeichen mittels eines entsprechend Bildpunkten mit einer Pixelfrequenz modulierten Lichtstrahlenbündels, insbesondere einer Laserlichtquelle.

Generell sollen solche optischen Flachbett-Ablenksysteme ein räumlich feststehendes Lichtstrahlenbündel in Richtung einer Ablenkzeile über eine plane Ablenkebene bewegen, und zwar möglichst so, daß normalerweise jeder Pixelperiode ein gleich langes Ablenkweginkrement unabhängig von der Lage des Inkrements in der Ablenkzeile entspricht. Dies beinhaltet auch bei dem optischen Flachbett-Ablenksystem der eingangs genannten Gattung mit einer dreh- oder schwenkbaren spiegelnden Fläche, daß jedem Drehwinkel dieser Fläche eine proportionale Strecke in der Ablenkebene korrespondiert. Außerdem sollen zwischen aufeinanderfolgenden Ablenkzeilen konstante Abstände vorliegen. Diese Beziehung ist wegen einer Reihe von Fehlermöglichkeiten, die u.a. auf die begrenzte Fertigungsgenauigkeit solcher Flachbett-Ablenksysteme zurückgehen, begrenzt: Insbesondere können das sogenannte Lagerwobbeln des Lagers, in dem die dreh- oder schwenkbare spiegelnde Fläche gelagert ist, und der sogenannte Polygonpyramidalfehler im Falle eines Polygons aus mehreren gegeneinander versetzten reflektierenden Flächen die Beziehung aufeinanderfolgender Ablenkzeilen stören (der Polygonpyramidalfehler beinhaltet die Winkelabweichung je einer reflektierenden Fläche des Polygons gegenüber einer Bezugsfläche).

Um trotz solcher störender Einflüsse Ablenkzeilen in einer planen Ablenkebene exakt abzulenken, was insbesondere bei typographischen Anwendungen besonders wünschenswert ist, da hier bereits kleinste Unregelmäßigkeiten störend auffallen, ist es naheliegend, einen möglichst großen Ablenkwinkel anzustreben. Bei gegebener Ablenklänge kann nämlich durch einen größeren Ablenkwinkel der optisch wirksame Abstand oder Arm zwischen der dreh- oder schwenkbaren spiegelnden Fläche und der Ablenkebene entsprechend reduziert werden. Dadurch wirken sich Ungenauigkeiten der Bewegung und Stellung der spiegelnden Fläche, beispielsweise eines Polygons, weniger in der Ablenkebene aus.

Eine exakte Positionierung eines Bildpunktes längs der Zeilen in der Bildebene ist auch deswegen wünschenswert, um die Bildposition durch einen relativ einfachen Drehmeßgeber bestimmen zu können, der mit den rotierenden aktiven Reflexflächen in Verbindung steht. Anderenfalls ist eine aufwendige Messung mit einem Rasterlineal in der Bildebene sowie mit einem analog zu dem modulierten Strahlenbündel abgelenkten Meßstrahlenbündel mit zugehöriger Optik erforderlich, die einen bewegten Bildpunkt des Meßstrahlenbündels auf einem Fotoempfänger abbildet.

In Flachbett-Ablenksystemen ist der Ablenkwinkel zur Senkrechten auf der Filmebene begrenzt, da der Bildpunkt nicht zu groß abgebildet werden darf, denn an den Rändern wird die Abbildung immer stärker ellipsenförmig. - In typischen bekannten optischen Flachbett-Ablenksystemen besteht die zwischen der dreh- oder schwenkbaren spiegelnden Fläche und der Ablenkebene angeordnete Optik zum Ablenken eines Lichtstrahlenbündels in Ablenkpositionen der Ablenkebene im wesentliche proportional zu einem Ablenkwinkel der dreh- oder schwenkbaren spiegelnden Fläche aus Flachfeldlinsen in einer vielgliedrigen und entsprechend aufwendigen Anordnung. Diese Linsen werden auch als $f\theta$-Linse bezeichnet. Nachteilig ist aber bei solchen $f\theta$-Linsen, daß sie nur in einem begrenzten Bereich des Ablenkwinkels vor allem bei hohen Ansprüchen an die Auflösung wie in einem typographischen Setzgerät verwendet werden können. Der Eingangswinkel solcher Linsensysteme ist ebenfalls stark begrenzt.

Um den Eingangswinkel solcher linearisierenden Linsensysteme zu vergrößern, ist bereits vorgeschlagen worden, daß das Linsensystem eine aplanatische Einzellinse mit einer ersten, der rotierenden aktiven Reflexfläche zugewandten, annähernd planen Fläche und mit einer zweiten, der Ablenkebene (Bildebene) zugewandten, dergestalt sphärisch-konvexen Fläche, daß die Hauptstrahlen bei allen Ablenkwinkeln im wesentlichen radial auf sie treffen, sowie einen feldebnenden Spiegel in der Nähe der Ablenkebene umfaßt (Patentanmeldung P 34 04 407.8).

Der vorliegenden Erfindung liegt die Aufgabe zugrunde, nach einem anderen Prinzip den pro Zeilenlänge nutzbaren Rotationswinkel der aktiven Reflexfläche weiter zu vergrößern, um damit insbesondere den verzerrenden Einfluß des Zeilentaumels bei gegebener Zeilenlänge in der Ablenkebene bzw. in der Bildebene gering zu halten.

Diese Aufgabe wird durch die im kennzeichnenden Teil des Anspruchs 1 angegebene Erfindung gelöst.

Durch das umgekehrte fernrohrartige optische System wird ohne aufwendige Veränderung des abbildenden Linsensystems der nutzbare Rotationswinkel einer aktiven Reflexfläche bzw. der Ausgangswinkel dieser Reflexfläche, die gleich dem Eingangswinkel des fernrohrartigen Systems ist, so groß, daß ein Rotationswinkel von 130° pro Zeile genutzt werden kann. Daraus ergibt sich unmittelbar eine erhebliche Reduzierung des Zeilentaumels in der Ablenkebene, da dieser reziprok dem nutzbaren Rotationswinkel der aktiven Reflexfläche ist.

In besonders günstiger Weise wird durch den großen nutzbaren Rotationswinkel eine Voraussetzung dafür geschaffen, daß mit dem fernrohrartigen System statt eines Vielflächenpolygons nur zwei rotierende Reflexfkörper vorzusehen sind, die jeweils nach dem Pentaprismenprinzip kippunempfindlich ausgebildet sind. Diese nach dem Pentaprismenprinzip aufgebauten Reflexkörper weisen je eine Reflexfläche auf, über die ein auftreffendes Strahlenbündel zu einer aktiven Reflexfläche zurückreflektiert wird, die zu der erstgenannten Reflexfläche um 45° geneigt ist und das Strahlenbündel über das abbildende optische Linsensystem schwenkt. Damit ist der Ausgangswinkel, unter dem das Strahlenbündel von der aktiven Reflexfläche austritt, praktisch unabhängig von dem Eintrittswinkel des Strahlenbündels in das kippunempfindliche Prisma. Es tritt stets eine Strahlablenkung von 90° zwischen dem Eingangsstrahlenbündel und dem Ausgangsstrahlenbündel der aktiven Reflexfläche ein. Ein Zeilentaumel ist über den Rotationswinkel dieser aktiven Reflexfläche praktisch beseitigt. Darüber hinaus kann durch paarweise Herstellung der beiden kippunempfindlichen Reflexkörper, die in das Ablenksystem eingebaut werden, insbesondere durch gemeinsames Polieren auch bei sonst groben Toleranzen ein

gleicher Ablenkwinkel für beide aktive Reflexflächen erreicht werden. Da pro Umdrehung der beiden rotierenden aktiven Reflexflächen nur zwei Ablenkzeilen abgetastet werden, kann die Drehzahl wesentlich erhöht werden, woraus sich wiederum ein besserer Gleichlauf ergibt. - Der große Rotationswinkel jeder aktiven rotierenden Reflexkörper ermöglicht die Verwendung eines verhältnismäßig wenig aufwendigen Positionsgebers mit hoher Auflösung, der mit der Drehachse der Reflexflächen gekuppelt ist.

Es ist bei dem erfindungsgemäßen Flachbett-Ablenksystem nicht unbedingt erforderlich, daß ein fθ-Linsensystem als abbildendes Linsensystem verwendet wird, vielmehr genügt hierzu eine einfache Optik.

Besonders vorteilhaft wird zur Ausbildung eines kompakten Flachbett-Ablenksystems das fernrohrartige optische System nach Anspruch 3 mit einem Hohlspiegel erzeugt, dessen Fokusierebene mit der Zwischenbildebene der jeweils das Strahlenbündel reflektierenden aktiven Reflexfläche und einer vorgeschalteten Fokusierlinse zusammenfällt. Die Zwischenbildebene der Fokusierlinse liegt durch die Rotationsbewegung der aktiven Reflexfläche ebenfalls auf einem Kreisbogen.

Eine besonders vorteilhafte Anordnung der beiden in dem Flachbett-Ablenksystem vorgesehenen kippunempfindlichen Prismen geht aus Anspruch 4 hervor. - Die beiden kippunempfindlichen Reflexkörper bilden zusammen mit dem sie teilweise überdeckenden geraden Prisma eine verhältnismäßig wenig aufwendig zu fertigende kompakte Einheit.

Vorteilhaft wird ein Manginspiegel als Hohlspiegel verwendet. Die Strahlablenkung am Manginspiegel ist so ausgelegt, daß sie etwa zur Hälfte auf den Hohlspiegel selbst und zur restlichen Hälfte auf die zugehörige Linse entfällt. Mit dem Manginspiegel kann die Korrektur des optischen Systems vereinfacht werden.-Zweckmäßigerweise kann das abbildende Linsensystem nach Anspruch 6 aus einer fΘ-Linsenanordnung und einem feldebnenden Hohlspiegel bestehen. Dabei kann ein kleiner Abstand zwischen der fΘ-Linsenanordnung und dem Hohlspiegel bei einem großen Ablenkwinkel eingehalten werden.

Die fΘ-Linsenanordnung ist besonders zweckmäßig nach Anspruch 7 aufgebaut. Die fΘ-Linsenanordnung und insbesondere die vordere Planfläche können klein gehalten werden, da das erfindungsgemäße Flachbett-Ablenksystem eine Eintrittspupille in der vorderen Planfläche bildet.

Die fΘ-Linsenanordnung kann durch eine unverkittete nachgeschaltete negative Zerstreuungslinse zu einer weiteren Korrektur, insbesondere bei einer Verzeichnungsüberkorrektur an der Planfläche 10 ergänzt werden.

Die Erfindung wird im folgenden anhand einer Zeichnung mit drei Figuren erläutert. Es zeigen:

Fig. 1    ein Ausführungsbeispiel des Flachbett-Ablenksystems schematisch in einer Ansicht von unten auf das Flachbett-Ablenksystem ohne Antriebsmotor;

Fig. 2    eine Seitenansicht des Flachbett-Ablenksystems nach Fig. 1; und

Fig. 3    eine Einzelheit des Flachbett-Ablenksystems nach den Figuren 1 und 2, insbesondere die kippunempfindlichen beiden Prismen.

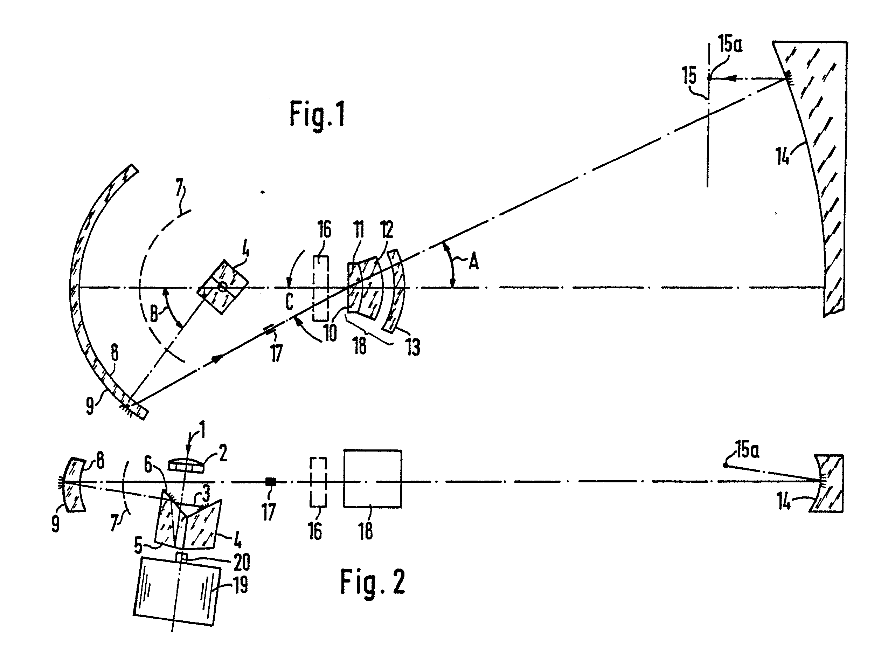

Zunächst beginnend mit Figur 2 ist mit 1 ein paralleles Strahlenbündel bezeichnet, welches aus einem aufgeweiteten Laserstrahl gewonnen ist. Im Strahlengang dieses Strahlenbündels befindet sich eine Fokusierlinse 2, die das Strahlenbündel parallel zu und in der Nähe von einer Drehachse 20 eines Antriebsmotors mit einem Lager 19 auf jeweils eines von zwei nebeneinander verkitteten kippunempfindlichen Prismen 4, 5 richtet, die generell als kippunempfindliche Reflexkörper bezeichnet werden.

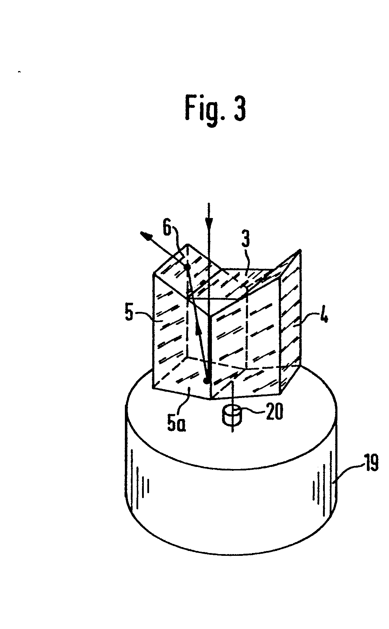

Der Aufbau der beiden Prismen ergibt sich insbesondere aus Fig. 3: Sie sind oberhalb des Antriebsmotors und Lagers 19 um die Rotationsachse 20, mit der sie in nicht dargestellter Weise in Verbindung stehen, drehbar. Es ist aus Fig. 3 ersichtlich, wie die beiden Prismen 4 und 5 im wesentlichen parallel zur Rotationsachse 20 angeordnet sind. Jedes der beiden Prismen weist eine obere aktive Reflexfläche z.B. 6 auf, die in einem Winkel von 45° einer zweiten Reflexfläche gegenübersteht. Die zweite Reflexfläche z.B.5a ist gegenüber der Horizontalen um etwa 5° geneigt. Die beiden aktiven oberen Reflexflächen der beiden Prismen sind teilweise durch ein gerades drittes Prisma 3 überdeckt, welches mit einer horizontalen Fläche, die normal zu dem Strahlenbündel 1 orientiert ist, als Eingangsfläche dient. Das Strahlenbündel verläuft also durch das Prisma 3, durch die aktive Reflexfläche 6 zur Reflexfläche 5a, wird von dieser zurückreflektiert auf das Innere der aktiven Reflexfläche 6 und tritt von dieser rechtwinklig zu dem eintretenden Strahlenbündel aus dem Prisma aus.

Jede der beiden aktiven Reflexflächen hat einen Rotationswinkel bzw. Ausgangshalbwinkel B. Das Ausgangsstrahlenbündel ist auf einen Manginspiegel mit einer Negativlinse 8 auf einem Hohlspiegel 9 gerichtet. Durch die Drehbewegung der aktiven Reflexflächen liegt eine Zwischenbildebene der Fokusierlinse 2 auf einem Bogen. Die Fokusierlinie fällt mit der Fokusebene des Manginspiegels zusammen und ist mit 7 bezeichnet. Im vorliegenden Fall ist die Strahlablenkung am Manginspiegel auf 25° ausgelegt, wovon etwa die Hälfte auf den Hohlspiegel 9 und die Hälfte auf die Negativlinse 8 entfällt.

Der Manginspiegel erzeugt einen Konvergenzpunkt bzw. eine Eintrittspupille an einer planen Frontfläche 10 einer fθ-Linsenanordnung 18.

Zu der fθ-Linsenanordnung, die in herkömmlicher Bauweise ausgebildet sein kann, gehört ein Hauptglied mit der planen Frontfläche 10 und einer strahlkonzentrischen Konvexfläche 11. Sie besteht aus niederbrechendem Glas. Verkittet mit dieser Linse ist eine weitere Linse aus hochbrechendem Glas, die eine konvexe strahlkonzentrische Ausgangsfläche 12 aufweist. Außerdem gehört zu der fθ-Linsenanordnung eine unverkittete negative Zerstreuungslinse 13, die zur Korrektur einer Verzeichnungsüberkorrektur an der Planfläche 10 dient.

Die Korrektur des Gesamtsystems kann ganz in die fθ-Linsenanordnung verlegt werden oder aber das Fernrohrsystem. Zu dem Fernrohrsystem gehören die Fokusierlinse 2, die jeweils eingedrehte aktive Reflexfläche sowie der Manginspiegel.

Die fθ-Linsenanordnung wird schließlich vervollständigt durch einen zwischen einer planen Bildebene 15 und den Linsen mit den Flächen 10, 11, 12 eingeschalteten feldebnenden Hohlspiegel 14. Der feldebnende Spiegel 14 verkürzt den Strahlengang zwischen den genannten Linsen und der planen Bildebene.

Für jede nutzbare Position einer der aktiven Reflexflächen mit jeweils einem Rotationswinkel von beispielsweise 130˚ pro Zeile wird ein Bildpunkt 15a praktisch verzerrungsfrei in der Bildebene 15 abgebildet, und zwar in einer Zeilenposition, die proportional dem Rotationswinkel ist.

In den Figuren 1 und 2 ist bei 17 angedeutet, daß aus dem Manginspiegel ein paralleles Strahlenbündel in Richtung der fθ-Linsenanordnung austritt. Mit dem Bezugszeichen 16 ist die Position zusätzlicher oder alternativer Korrekturglieder angedeutet, die in einfacheren optischen Systemen, d.h. bei einer anderen Ausführungsform, gewünscht sein können. In vorteilhafter Weise steht viel Raum für solche Korrekturglieder 16 zur Verfügung, da sich die Pupille im Bereich der Planfläche 10 in großem Abstand zu der Drehachse 20 befindet.

Im einzelnen kann als Korrekturglied 16 eine Plankonkavlinse vorgesehen sein, auf die das parallele Strahlenbündel 17 fällt und die eine solche Verzeichnung in das abbildende Linsensystem 18 vorgibt, daß der Hohlspiegel 14 entfallen kann und gleichwohl ein verzeichnungsfreies Bild in der Bildebene 15 entsteht.

Indem eine Konkavseite der Plankonkavlinse 16 konzentrisch zu einem Kreuzungspunkt des parallelen Strahlenbündels 17 ausgebildet ist, kann das erzeugte virtuelle Bild frei von Astigmatismus und Koma sein.

In einer vorteilhaften Variante kann als abbildendes Linsensystem 18 ein sogenanntes abgewandeltes Steinheil-Periskop vorgesehen sein, welches das virtuelle Bild in einer konkaven Bildschale, welches von der Plankonkavlinse 16 erzeugt wird, auf die plane Bildebene 15 abbildet.

- 10 -

0179213

Schließlich kann ein Astigmatismus des abbildenden Linsensystems 18 in wenig aufwendiger Weise dadurch korrigiert werden, daß eine Abweichung von der Parallelität des parallelen Strahlenbündels eingestellt wird.

Mit den Weiterbildungen gemäß den Ansprüchen 9 bis 12 kann also der feldebnende Hohlspiegel 14 eingespart werden. Das Optische System kann insgesamt mit geringem Aufwand verzeichnungsfrei gestaltet werden.

Generell gestattet die Erfindung die Ausnutzung eines großen effektiven Drehwinkels der beiden kippunempfindlichen Reflexkörper. Da nur zwei Reflexkörper notwendig sind, kann ihr Abstand zu der Rotationsachse gering gehalten werden, woraus sich weitere Vorteile ergeben, insbesondere geringe Zentrifugalkräfte.

Patentansprüche:

1. Optisches Laserstrahl-Ablenksystem mit rotierenden aktiven Reflexflächen und einem abbildenden Linsensystem, d a d u r c h   g e k e n n z e i c h n e t , daß dem abbildenden Linsensystem (18) ein umgekehrt fernrohrartiges optisches System (2 - 8) vorgeschaltet ist, welches einen Eingangswinkel (C) des abbildenden Linsensystems vergrößert.

2. Optisches Laserstrahl-Ablenksystem nach Anspruch 1, d a d u r c h   g e k e n n z e i c h n e t , daß nur zwei rotierende Reflexkörper (4, 5) vorgesehen sind, welche nach dem Pentaprismenprinzip kippunempfindlich gegenüber Neigungen der Drehachse (20) ausgebildet sind und dem umgekehrt fernrohrartigen optischen System vorgeschaltet sind.

3. Optisches Laserstrahl-Ablenksystem nach Anspruch 1, d a d u r c h   g e k e n n z e i c h n e t , daß im Strahlengang des fernrohrartigen optischen Systems (2 - 8) eine feste Fokusierlinse (2), die zusammen mit jeweils einem der kippunempfindlichen Reflexkörper (4, 5) eine konkav gekrümmte Zwischenbildebene (7) erzeugt, sowie ein Hohlspiegel (9) angeordnet sind, dessen Fokusierebene (7) mit der Zwischenbildebene (7) zusammenfällt.

4. Optisches Laserstrahl-Ablenksystem nach einem der Ansprüche 1 bis 3, d a d u r c h   g e k e n n z e i c h n e t , daß die beiden kippunempfindlichen Reflexkörper (4, 5) nebeneinander und im wesentlichen parallel zur Rotationsachse (20) angeordnet sind, daß ein die beiden aktiven Reflexflächen der Prismen außen teilweise überdeckendes,

- 2 -

gerades Prisma (3) auf einer normal zur Rotationsachse orientierten Fläche von dem im wesentlichen parallel zur Rotationsachse gerichteten Laserstrahl getroffen wird.

5. Optisches Laserstrahl-Ablenksystem nach Anspruch 3,
g e k e n n z e i c h n e t   d u r c h
einen Manginspiegel (8, 9) als Hohlspiegel.

6. Optisches Laserstrahl-Ablenksystem mit einem in eine plane Bildebene abbildenden Linsensystem, nach einem der Ansprüche 1 - 5,
d a d u r c h   g e k e n n z e i c h n e t ,
daß das abbildende Linsensystem aus einer fθ-Linsenanordnung (18) und einem zwischen dieser und der planen Bildebene (15) angeordneten feldebnenden Hohlspiegel (14) besteht.

7. Optisches Laserstrahl-Ablenksystem nach Anspruch 6,
d a d u r c h   g e k e n n z e i c h n e t ,
daß die fθ-Linsenanordnung (18) ein Hauptglied (10 - 12) mit einer Linse aus einem niederbrechenden Glas mit einer vorderen Planfläche (10) und einer strahlkonzentrischen Konvexfläche (11) sowie mit einer verkitteten Linse aus hochbrechendem Glas mit einer strahlkonzentrischen Außenfläche (12) aufweist.

8. Optisches Laserstrahl-Ablenksystem nach einem der Ansprüche 1 - 7,
d a d u r c h   g e k e n n z e i c h n e t ,
daß jeder kippunempfindliche Reflexkörper (4, 5) nach dem Pentaprismenprinzip außer der Reflexfläche (5) eine im Winkel von 45° gegenüberstehende weitere Reflexfläche (6) aufweist.

9. Optisches Laserstrahl-Ablenksystem nach einem der Ansprüche 3 - 8,

d a d u r c h   g e k e n n z e i c h n e t ,

daß ein von dem Hohlspiegel (9) bzw. Manginspiegel (8, 9) ausgehendes paralleles Strahlenbündel (17) auf eine Plankonkavlinse (16) fällt, deren Planfläche eine solche Verzeichnung in das abbildende Linsensystem (fθ-Linsenanordnung 18) vorgibt, daß bei fehlendem Hohlspiegel 14 ein verzeichnungsfreies Bild in der Bildebene (15) entsteht.

10. Optisches Laserstrahl-Ablenksystem nach Anspruch 8,

d a d u r c h   g e k e n n z e i c h n e t ,

daß eine Konkavseite der Plankonkavlinse (16) konzentrisch zu einem Kreuzungspunkt des parallelen Strahlenbündels (17) ist.

11. Optisches Laserstrahl-Ablenksystem nach Anspruch 9,

d a d u r c h   g e k e n n z e i c h n e t ,

daß zur Abbildung eines von der Plankonkavlinse (16)in einer konkaven Bildschale erzeugten virtuellen Bildes auf eine plane Bildebene (15) als abbildendes Linsensystem 18 ein abgewandeltes Steinheil-Periskop vorgesehen ist.

12. Optisches Laserstrahl-Ablenksystem nach einem der vorangehenden Ansprüche,

d a d u r c h   g e k e n n z e i c h n e t ,

daß zur Korrektur des Astigmatismus des abbildenden Linsensystems (18) Mittel zur Erzielung einer Abweichung von der Parallelität des parallelen Strahlenbündels (17) vorgesehen sind.

Fig.1

Fig.2

# Fig. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 4) |
|---|---|---|---|
| Y | US-A-3 519 325 (I. ABEL et al.) <br> * Spalte 2, Zeilen 13-23; Spalte 3, Zeilen 54-56; Figur 1 * | 1 | G 02 B 26/10 <br> G 06 K 15/12 <br> B 41 B 21/16 |
| Y | US-A-3 873 180 (S. BOUSKY) <br> * Spalte 2, Zeilen 9-27; Figur 2 * | 1 | |
| A | US-A-3 750 189 (J. FLEISCHER) <br> * Spalte 3, Zeilen 47-49; Spalte 4, Zeilen 12-17; Figuren 2,4 * | 1 | |
| A | US-A-3 966 328 (K. WIKLUND) <br> * Spalte 2, Zeilen 1,2; Figur 1 * | 2 | |
| A | US-A-4 382 680 (M. HAMAR) <br> * Spalte 2, Zeilen 17-26; Spalte 2, Zeile 67 - Spalte 3, Zeile 6; Figur 6 * | 2 | RECHERCHIERTE SACHGEBIETE (Int. Cl.4) |
| A | US-A-3 667 360 (F. VICIK) <br> * Spalte 4, Zeile 54 - Spalte 5, Zeile 12; Figuren 3,4 * | 3,5 | G 02 B 7/00 <br> G 02 B 26/00 <br> G 06 K 15/00 <br> H 04 N 1/00 <br> B 41 B 21/00 <br> B 41 B 19/00 |
| A | EP-A-0 016 630 (XEROX CORP.) <br> * Seite 5, Zeilen 5-16; Figuren 2-4 * | 6,9,12 | |

--- -/-

Der vorliegende Recherchenbericht wurde für alle Patentansprüche erstellt.

| Recherchenort | Abschlußdatum der Recherche | Prüfer |
|---|---|---|
| DEN HAAG | 16-12-1985 | POPINEAU G.J.P. |

Europäisches
Patentamt

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
| A | JOURNAL OF ELECTRONIC ENGINEERING, Nr. 135, März 1978, Seiten 31-33, Tokyo, JP; M. SHIRAGAMI: "Laser beam printers print chinese ideographs" * Figur 2 *. | 7 | |

RECHERCHIERTE
SACHGEBIETE (Int Cl 4)

Der vorliegende Recherchenbericht wurde für alle Patentansprüche erstellt.

| Recherchenort | Abschlußdatum der Recherche | Prüfer |
|---|---|---|
| DEN HAAG | 16-12-1985 | POPINEAU G.J.P. |